# FASCICULE DE BREVET EUROPEEN

(11) **EP 0 491 614 B1**
(45) Date de publication et mention de la délivrance du brevet: **21.06.1995**
(21) Numéro de dépôt: 91403413.7
(22) Date de dépôt: 17.12.1991
(51) Int. Cl.: F42B 14/02, B29C 33/00, B29C 45/26

(54) **Ceinture dérapante pour projectile de tout calibre et son procédé de réalisation**
Drehbarer Führungsring für Geschosse jeden Kalibers und Verfahren zu seiner Herstellung
Slipping obturator ring for projectiles of all calibres and method for its manufacture

(30) Priorité: 19.12.1990 FR 9015962
(43) Date de publication de la demande: 24.06.1992
(73) Titulaire: GIAT INDUSTRIES SOCIETE ANONYME, F-78034 Versailles Cédex (FR)
(72) Inventeur: Chiarelli, François, F-18000 Bourges (FR); Chazeirat, Jean-Louis, F-18570 La Chapelle Saint Moin (FR)
(74) Mandataire: Célanie, Christian

(56) Documents cités:
- DE-A- 3 735 737
- FR-A- 2 606 869
- US-A- 4 736 666
- US-A- 4 907 513

## Description

Le secteur technique de la présente invention est celui des ceintures dérapantes équipant les projectiles de tout calibre tirés à l'aide d'un tube de canon rayé.

Pour stabiliser un projectile sur sa trajectoire, on utilise soit l'effet gyroscopique soit un empennage.

L'effet gyroscopique du projectile nécessite d'imprimer à celui-ci une rotation importante pendant sa phase de lancement, cette rotation est communiquée par le tube de l'arme qui est fortement rayé.

Quant à la stabilisation par empennage, elle se fait grâce à un empennage rejeté à l'arrière du projectile, créant ainsi un couple de rappel sur trajectoire. Ce type de projectile est tiré, soit à partir de tubes rayés, soit à partir de tubes lisses. Ce mode de stabilisation s'applique essentiellement aux munitions à effet chimique (obus à charge creuse) ou à effet cinétique (projectile flèche).

Afin de permettre le tir de ce type de projectile à partir de tubes rayés, des concepts techniques ont été mis au point par différents pays y compris la France. Le concept le plus utilisé repose essentiellement sur la limitation de la rotation du projectile pendant la phase de lancement grâce à une ceinture dite dérapante qui suit les rayures du tube tout en n'imprimant au projectile qu'une légère rotation par frottement de glissement. Le concept de la ceinture dérapante est celui qui est le plus souvent retenu pour permettre le tir de munitions à énergie cinétique, du type flèche à partir de tubes rayés.

On se reportera par exemple au brevet FR2606869 qui (cf. le préambule de la revendication 1) décrit une telle ceinture dérapante comprenant une sous bague, un grain avant et un corps de ceinture en deux demi-coquilles assemblées par vis ou montées par déformation à chaud. Ce document divulgue implicitement un procédé de fabrication d'une telle ceinture dérapante.

Un tel montage est difficilement adaptable à un projectile de moyen ou petit calibre.

En effet le montage d'un corps de ceinture en deux demi-coquilles assemblées par vis est coûteux et délicat à réaliser sur des pièces de petites dimensions. Si le montage est effectué par déformation à chaud d'une ceinture en matière plastique, le jeu résiduel obtenu après refroidissement est difficilement reproductiblé.

Le brevet US3613596 décrit un projectile de mortier comportant une ceinture réalisée en Cuivre logée dans une gorge comportant une portée conique dont l'angle est ouvert vers la partie arrière du projectile. Elle est destinée à prendre les rayures du tube de l'arme pour entraîner le projectile en rotation.

Le brevet US3834314 prévoit d'équiper le projectile flèche d'une ceinture qui, sous la pression des gaz, coulisse sur une partie conique dont l'angle est ouvert vers l'avant du projectile. Le coulissement a pour effet de comprimer la ceinture entre le sabot conique et les rayures du tube et assure l'étanchéité désirée au détriment d'un dérapage convenable de la ceinture par rapport au projectile.

Le but de la présente invention est d'éviter les inconvénients cités précédemment en proposant une ceinture dérapante ne transmettant qu'une faible rotation au projectile tout en assurant l'étanchéité dans le tube de l'arme.

C'est un autre but de la présente invention que de proposer un procédé de réalisation par moulage de cette ceinture qui soit particulièrement économique.

Ainsi l'invention a pour objet une ceinture dérapante du type de celle décrite par la revendication 1.

Grâce à une telle disposition, il est possible de réaliser une telle ceinture par injection tout en assurant un jeu radial reproductible, donc une liberté de rotation du corps de ceinture relativement au projectile, et cela malgré le retrait de la matière du corps de ceinture sur le projectile.

Le fond de la gorge présentera de préférence une portée cylindrique sur laquelle vient le grain avant et cette portée cylindrique pourra être constituée par le fond d'une rainure cylindrique.

L'invention a également pour objet un procédé de fabrication d'une ceinture dérapante en matière plastique tel que décrit par la revendication 4.

Un tel procédé est particulièrement économique puisqu'il ne nécessite qu'une seule opération d'injection.

Le procédé de fabrication comprendra avantageusement les étapes suivantes:
- Préchauffage des différentes pièces du moule ainsi que du projectile à une température comprise entre 86°C et 94°C,
- Montage du projectile dans le moule et bridage de celui-ci,
- Injection de polyamide, par exemple de polyamide 6-6, à une température comprise entre 300°C et 310°C et à une pression comprise entre 800 et 900 Méga-Pascals,
- Refroidissement pendant au moins 30 secondes,
- Démoulage.

L'invention a enfin pour objet le moule utilisé pour la mise en oeuvre de ce procédé, le moule étant décrit par la revendication 6.

De façon préférentielle, la cloison est portée par deux éléments de coquille destinés à être assemblés autour du projectile au niveau de la gorge de ceinture, ces éléments de coquille comportant un profil interne permettant d'obtenir le corps de ceinture, et un élément de coquille au moins portant un trou d'injection sensiblement radial débouchant sur le profil interne.

Selon un mode particulier de réalisation, les éléments de coquilles comportent un deuxième profil interne permettant d'obtenir le grain avant et un élément de coquille au moins porte un deuxième trou d'injection débouchant sur ce deuxième profil interne et communiquant avec le premier trou d'injection.

Avantageusement, le moule comprend une pièce inférieure destinée à recevoir le projectile, ainsi qu'une pièce supérieure pouvant être bridée sur la pièce inférieure de façon à immobiliser le projectile portant les éléments de coquille.

Selon une variante d'exécution, le canal d'injection est constitué par un demi-canal porté par la pièce inférieure, s'étendant jusqu'à la gorge du projectile, et un demi-canal porté par la pièce supérieure et communiquant avec le premier trou d'injection porté par l'élément de coquille.

Un avantage de la présente invention réside dans le fait que le jeu entre la ceinture et le projectile est constant et reproductible d'une munition à une autre, ce qui n'affecte pas les performances du système d'arme.

Un autre avantage réside en ce que ce jeu est conservé dans une plage de températures de -50°C à +70°C.

Un autre avantage réside dans l'absence d'opération de montage mécanique de la ceinture, seule une opération de surmoulage est nécessaire, ce qui réduit le coût de réalisation.

D'autres avantages de l'invention seront mieux compris à la lecture du complément de description donné à titre indicatif en relation avec les dessins annexés dans lesquels:
- la figure 1 montre en coupe partielle un mode de réalisation de la ceinture montée sur un projectile.
- la figure 2 montre le moule permettant d'obtenir la ceinture.
- la figure 3 montre une partie caractéristique du moule.
- la figure 4 représente une variante de moule permettant d'obtenir la ceinture.
- la figure 5 montre une partie caractéristique de cette variante de moule.

Dans la suite de la description, on va décrire l'application de la ceinture selon l'invention à un projectile flèche de moyen calibre, par exemple de 25mm, tiré dans un tube rayé. Toutefois cette ceinture peut être adaptée à n'importe quel type de munition qu'elle soit de petit, moyen ou gros calibre.

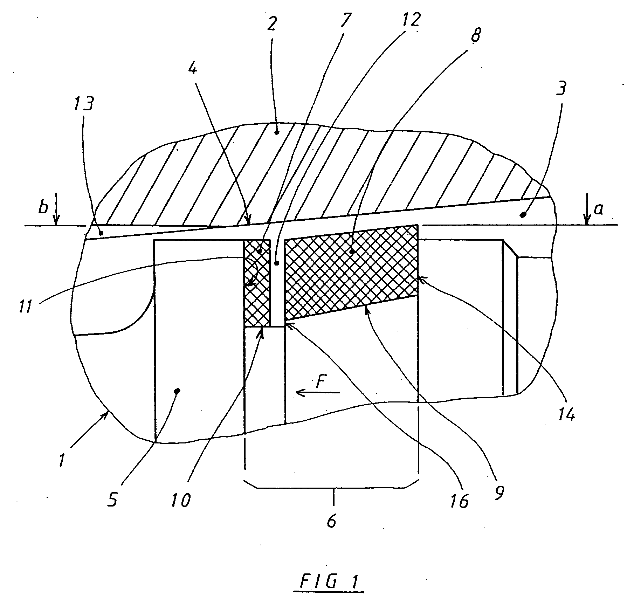

Sur la figure 1 est représenté partiellement un projectile 1 placé dans le tube d'une arme 2 au niveau d'une chambre 3 et d'un cône de forcement 4. Le projectile 1 comprend un sabot 5 constitué par plusieurs segments entourant un sous projectile (non représenté). Le sabot présente à sa périphérie une gorge circulaire 6 destinée à recevoir une ceinture.

La ceinture selon l'invention comprend un corps de ceinture 8 disposé sur une portée conique 9 du fond de la gorge 6, et un grain avant 7 venant sur une portée cylindrique 10 du fond de la gorge 6 et appliqué contre une paroi 11. Le grain est séparé du corps de ceinture par un jeu axial 12.

La portée cylindrique 10 peut comme ici être le fond d'une rainure cylindrique, mais il serait possible de prévoir une portée cylindrique ayant pour diamètre le plus petit diamètre de la portée conique 9. Une telle variante permettrait de réduire les coûts de réalisation de l'usinage de la gorge de ceinture 6 tout en évitant de fragiliser le sabot. La figure 4 montre un sabot équipé d'une ceinture conforme à une telle variante.

En se reportant à la figure 1, on remarque que le diamètre externe (a) du corps de ceinture 8 est légèrement supérieur au diamètre (b) des rayures 13 du tube 2 (différence de diamètres de l'ordre de 0,2 mm), et que son profil extérieur est complémentaire de celui du cône de forcement 4.

Le corps de ceinture 8 et le grain avant 7 sont réalisés en matière plastique classique du type polyamide, par exemple un polyamide 6-6.

Un procédé de réalisation de cette ceinture sera décrit par la suite.

Le fonctionnement est le suivant :
- au départ du coup,le corps de ceinture dérapante 8 est poussé vers l'avant suivant la direction F jusqu'à son arrêt par le grain avant 7. Le projectile et la ceinture avancent jusqu'au contact de cette dernière avec le cône de forcement 4. Alors un léger recul relatif du corps de ceinture 8 par rapport au projectile 1 est amorcé jusqu'à son arrêt par une paroi 14 de la gorge 6. Puis le projectile entraîne la ceinture, permettant ainsi la prise de rayures sur le corps de ceinture. Cette prise de rayures est très importante pour assurer l'étanchéité du projectile aux gaz propulsifs pendant la phase de lancement.
- pendant la phase de lancement, le corps de ceinture 8 tourne à la vitesse autorisée par le rayage du tube. La pression des gaz qui s'exerce sur l'arrière du corps de ceinture 8, le fait translater vers l'avant et l'amène en contact du grain avant 7. On obtient ainsi un jeu radial entre le corps de ceinture 8 et la portée conique 9. L'étanchéité est assurée et le projectile est entraîné dans une légère rotation par le contact du corps de ceinture 8 avec le grain avant 7.
- à la sortie du tube, sous l'effet des efforts centrifuges imposés au corps de ceinture 8 et à un moindre degré au grain avant 7, ces éléments se rompent en petits morceaux, libérant ainsi les différentes parties du sabot 5 et la procédure de séparation sabot-flèche peut alors commencer.

Ainsi avec une conicité de l'ordre de 53,6% pour la portée conique 9 et un jeu axial 12 de 1mm, on obtient après retrait du matériau constitutif de la ceinture un jeu radial entre le corps de ceinture 8 et le sabot 5 qui est compris entre 0,2 et 0,36mm.

Le jeu reste compris entre ces valeurs de façon reproductible quelle que soient les conditions du retrait ce qui est particulièrement intéressant du point de vue de la qualité de la fabrication.

Une telle valeur de jeu assure une transmission au projectile d'une vitesse de rotation d'environ 50000 tr/mn alors qu'avec une ceinture classique non dérapante la vitesse transmise est d'environ 140000 tr/mn (projectile de calibre 25 mm).

La ceinture selon l'invention est de préférence obtenue au moyen d'un procédé de fabrication dans lequel on dispose le projectile dans un moule permettant l'obtention simultanée du corps de ceinture et du grain avant par injection d'une matière thermoplastique, qui sera de préférence du polyamide 6-6.

Un tel procédé permet une fabrication économique de la ceinture selon l'invention car il n'impose qu'une seule opération de moulage.

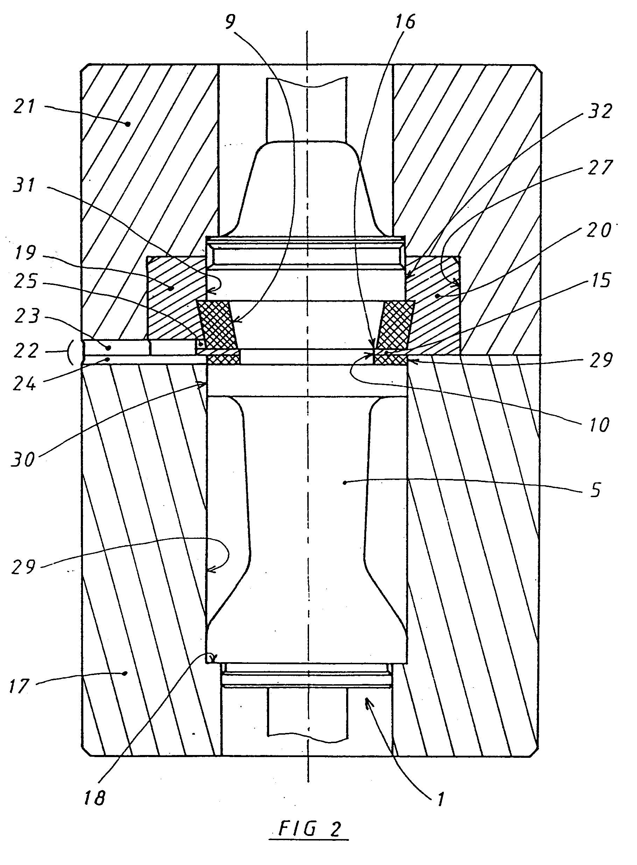

Le procédé nécessite pour sa mise en oeuvre un moule particulier qui va maintenant être décrit en référence à la figure 2 qui le représente après injection de la ceinture sur le projectile.

Ce moule comprend essentiellement une cloison 15 qui vient en contact avec la portée cylindrique 10 et la face latérale 16 de la rainure du côté de la portée conique 9.

Cette cloison est destinée à délimiter deux chambres distinctes au niveau de la gorge 6, l'une permettant l'injection du corps de ceinture 8 et l'autre celle du grain avant 7.

Le projectile 1 est disposé dans une pièce inférieure 17 et vient en appui sur un épaulement 18 de cette dernière.

Deux éléments de coquille 19 et 20, qui portent la cloison 15, sont disposés de part et d'autre du sabot et maintenus par une pièce supérieure 21.

L'ensemble du moule est ensuite bridé (bridage non représenté). L'injection du corps de ceinture 8 et du grain avant 7 s'effectue par un canal d'injection 22 composé des deux demi-canaux 23 et 24, appartenant respectivement à la pièce supérieure 21 et à la pièce inférieure 17, pièces qui doivent être positionnées angulairement avec précision l'une par rapport à l'autre. Ce canal 22 communique avec un trou d'injection 25 aménagé sur l'élément de coquille 19.

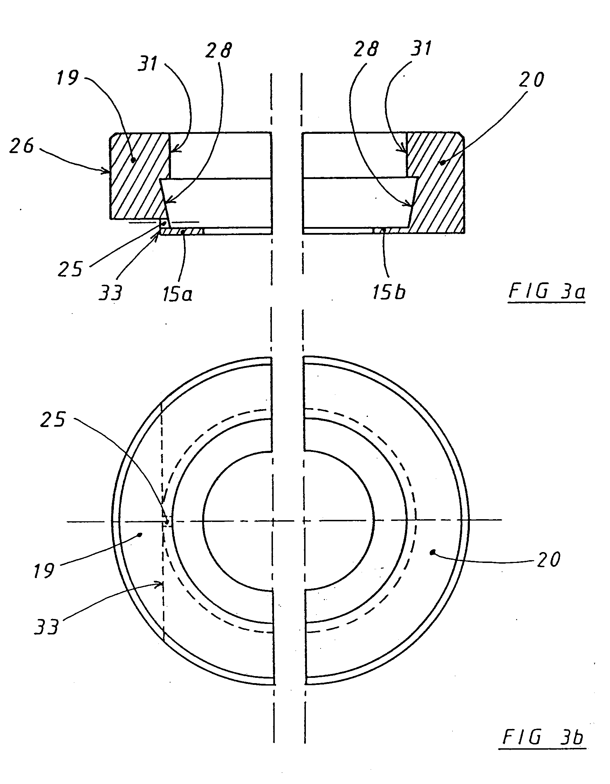

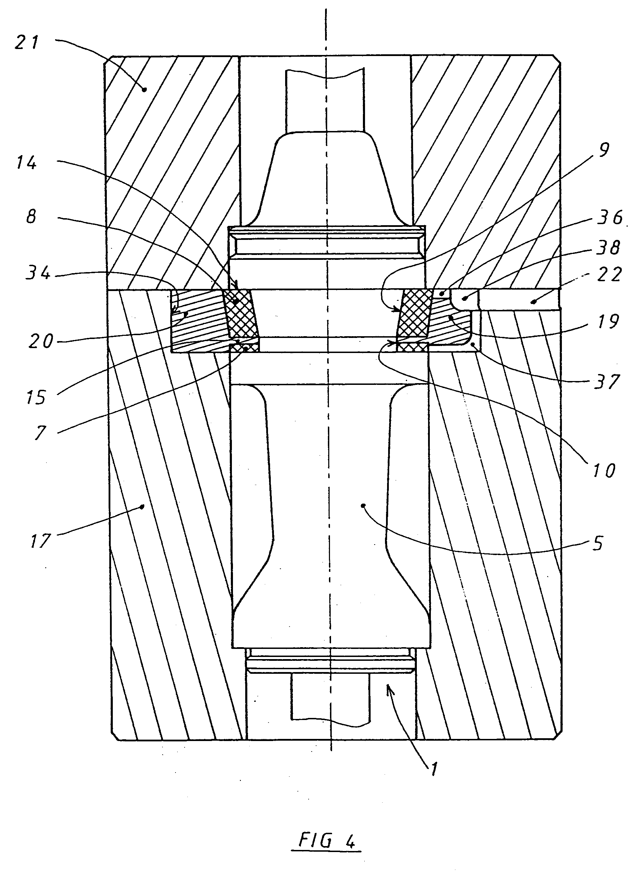

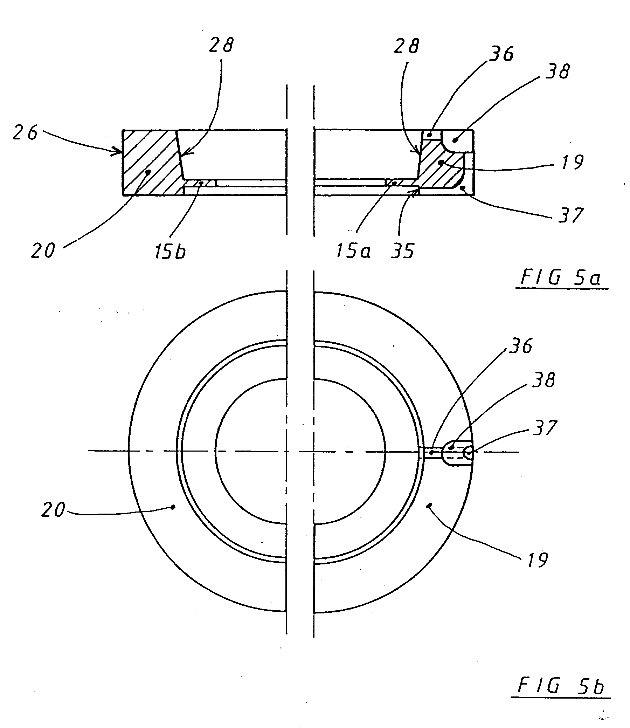

Les figures 3a et 3b représentent en détail les deux éléments de coquille 19 et 20.

Ces derniers présentent après assemblage un profil externe cylindrique 26 qui vient s'ajuster dans un alésage 27 de la pièce supérieure 21.

La cloison 15 est constituée par deux éléments de cloison 15a et 15b, l'assemblage des deux éléments de coquille autour du projectile permettant de constituer la cloison 15, dont l'épaisseur sera choisie égale à la valeur souhaitée pour le jeu axial 12 entre le corps de ceinture et le grain.

La cloison 15 sépare deux chambres distinctes au niveau de la gorge 6.

Dans ce mode particulier de réalisation du moule, la première chambre est délimitée par le profil interne 28 et la cloison 15 des deux éléments de coquille 19 et 20, ainsi que par la paroi 14 et la portée conique 9 de la gorge 6 du sabot.

Elle permet d'obtenir par injection le corps de ceinture 8.

La deuxième chambre est délimitée par la cloison 15, l'alésage 29 de la pièce inférieure 17 ainsi que par la portée cylindrique 10 et la paroi 11 de la gorge 6 du sabot.

Elle permet d'obtenir par injection le grain avant 7.

Afin d'éviter toute fuite de matière lors de l'injection:
- la cloison 15 est ajustée à la portée cylindrique 10 ainsi qu'à la face latérale 16 de la rainure cylindrique,
- l'alésage 29 de la pièce inférieure 17 est ajusté à la surface cylindrique 30 du sabot 5,
- l'alésage 31 des deux éléments de coquille 19 et 20 est ajusté avec la surface cylindrique correspondante 32 du sabot 5.

L'élément de coquille 19 porte le trou d'injection 25 aménagé suivant une direction sensiblement radiale. Ce trou débouche d'un côté sur la surface interne de l'élément 19, et de l'autre sur une entaille 33. Une telle disposition, en réduisant la longueur du trou 25, permet de faciliter lors du démoulage la séparation du corps de ceinture 8 de la matière thermoplastique comblant le canal d'injection 22.

L'entaille 33 sera positionnée lors du montage du moule en regard du demi-canal 23.

Le procédé de surmoulage selon l'invention comprend les étapes suivantes :
- préchauffage séparé du moule (composé de la pièce inférieure 17, de la pièce supérieure 21 et des deux éléments de coquille 19 et 20) et du projectile 1 à une température comprise entre 86°C et 94°C,
- montage du projectile 1 dans le moule suivant la configuration décrite précédemment,
- injection du matériau par le canal d'injection 22, le matériau étant à une température comprise entre 300°C et 310°C sous une pression d'injection à l'entrée du moule comprise entre 800 et 900 Méga-Pascals,
- démoulage après au moins 30s de refroidissement.

Le surmoulage entraînant un retrait de la matière, le grain avant 7 se retrouve serré sur la portée cylindrique 10. Il assure ainsi le maintien des différents segments du sabot 5.

Le corps de ceinture 8 est lui aussi sujet au phénomène de retrait et se retrouve serré sur la portée conique 9.

Mais lors du démoulage, lorsque l'on retire les deux éléments de coquilles 19 et 20, le jeu axial 12 qui était occupé précédemment par la cloison 15, permet de faire coulisser le corps de ceinture 8 sur la portée conique 9 vers l'avant du projectile suivant F, ce qui permet de donner le jeu radial entre le corps de ceinture 8 et la gorge 6.

On a schématisé sur la figure 4 un autre moule permettant d'obtenir la variante préférée de la ceinture selon l'invention dans laquelle le diamètre de la portée cylindrique 10 recevant le grain avant 7 est égal au plus petit diamètre de la portée conique 9.

Le moule permettant d'obtenir une telle ceinture présente encore une cloison 15 délimitant deux chambres l'une permettant l'injection du corps de ceinture 8 et l'autre celle du grain avant 7.

Les éléments de coquilles adaptés à cette variante sont représentés figures 5a et 5b.

Comme précédemment, ils présentent après assemblage un profil externe cylindrique 26 qui vient s'ajuster dans un alésage 34 aménagé cette fois dans la pièce inférieure 17.

La première chambre dans laquelle sera injecté le corps de ceinture 8 est délimitée par la cloison 15 et un premier profil interne 28 des éléments de coquille, ainsi que par la paroi 14 et la portée conique 9 du sabot, et en partie la pièce supérieure 21.

La deuxième chambre dans laquelle sera injecté le grain avant 7, est délimitée par la cloison 15 et un deuxième profil interne 35 des éléments de coquille, ainsi que par la paroi 11 et la portée cylindrique 10 du sabot.

L'élément de coquille 19 porte un premier trou d'injection 36 aménagé suivant une direction sensiblement radiale de l'élément de coquille et débouchant sur le premier profil interne 28.

Ce trou présente ici un profil hémi-cylindrique ouvert qui sera fermé par la pièce supérieure 21 au moment du montage.

Cet élément de coquille porte également un deuxième trou d'injection 37, constitué par deux canaux hémi-cylindriques ouverts qui sont perpendiculaires l'un à l'autre.

Le deuxième trou d'injection débouche sur le deuxième profil interne 35 et communique avec le premier trou au niveau d'une chambre d'alimentation 38.

Les canaux hémi-cylindriques seront fermés au moment du montage par la pièce inférieure 17.

La chambre d'alimentation 38 est positionnée en regard du canal d'injection 22 qui est réalisé sur la pièce inférieure 17 et qui présente lui aussi une forme hémi-cylindrique fermée lors du montage par la pièce supérieure 21.

Une telle disposition permet d'éviter l'usinage d'un canal d'injection sur la pièce supérieure.

L'indexation angulaire de ces deux pièces n'est donc plus nécessaire ce qui facilite le montage du moule et réduit les coûts de fabrication.

## Revendications

1. Ceinture dérapante en matière thermoplastique montée sur un projectile (1) ou un projectile à sabot, ceinture comportant un corps de ceinture (8) et un grain avant (7) disposés dans une gorge périphérique (6) du projectile et séparés par un jeu axial (12), *caractérisée en ce que* le fond de la gorge présente en section longitudinale une portée conique (9) dont l'angle est ouvert vers la partie arrière du projectile et en ce que le corps de ceinture (8) présente un profil interne complémentaire de celui de la portée conique (9), ledit profil intérieur étant tel que la rotation du projectile est limitée pendant la phase de lancement.

2. Ceinture dérapante selon la revendication 1, caractérisée en ce que le fond de la gorge (6) présente également une portée cylindrique (10) sur laquelle vient le grain avant (7).

3. Ceinture dérapante selon la revendication 2, caractérisée en ce que la portée cylindrique (10) est constituée par le fond d'une rainure cylindrique.

4. Procédé de fabrication d'une ceinture dérapante selon la revendication 1, lequel procédé on dispose le projectile (1) dans un moule permettant l'obtention simultanée du corps de ceinture (8) et du grain avant (7) par injection d'une matière thermoplastique.

5. Procédé de fabrication selon la revendication 4, caractérisé par les étapes suivantes:
- Préchauffage des différentes pièces du moule ainsi que du projectile à une température comprise entre 86°C et 94°C,
- Montage du projectile dans le moule et bridage de celui-ci,
- Injection de polyamide, par exemple de polyamide 6-6, à une température comprise entre 300°C et 310°C et à une pression comprise entre 800 et 900 Méga-Pascals,
- Refroidissement pendant au moins 30 secondes,
- Démoulage.

6. Moule utilisé pour la mise en oeuvre du procédé selon une des revendications 4 ou 5, caractérisé en ce qu'il comprend une cloison (15) destinée, lorsqu'un projectile (1) ou un projectile à sabot est mis en place dans le moule, à venir en contact avec le fond de la gorge (6) prévue dans le projectile ou le sabot séparant ainsi deux chambres distinctes au niveau de la gorge de ceinture du projectile ou du sabot l'une permettant l'injection du corps de ceinture (8) et l'autre celle du grain avant (7), et en ce qu'il comprend un canal d'injection (22) permettant d'alimenter simultanément des deux chambres, une première chambre étant délimitée notamment par la cloison (15), un profil interne (28) du moule, la portée conique (9) de la gorge (6) de projectile ou du sabot et une paroi (14) de celle-ci, une deuxième chambre étant délimitée notamment par la cloison (15), la portée cylindrique (10) de la gorge (6) de projectile ou du sabot et une paroi (11) de celle-ci.

7. Moule selon la revendication 6, caractérisé en ce que la cloison (15) est portée par deux éléments de coquille (19,20) destinés à être assemblés autour du projectile (1) au niveau de la gorge de ceinture (6), ces éléments de coquille comportant le profil interne (28) permettant d'obtenir le corps de ceinture (8) et en ce qu'un élément de coquille au moins porte un trou d'injection (25,36) sensiblement radial débouchant sur le profil interne.

8. Moule selon la revendication 7, caractérisé en ce que les éléments de coquilles comportent un deuxième profil interne (35) permettant d'obtenir le grain avant (7) et en ce qu'un élément de coquille au moins porte un deuxième trou d'injection (37) débouchant sur ce deuxième profil interne et communiquant avec le premier trou d'injection (36).

9. Moule selon une des revendications 7 ou 8, caractérisé en ce qu'il comprend une pièce inférieure (17) destinée à recevoir le projectile (1), ainsi qu'une pièce supérieure (21) pouvant être bridée sur la pièce inférieure (17) de façon à immobiliser le projectile portant les éléments de coquille (19,20).

10. Moule selon la revendication 9, caractérisé en ce que le canal d'injection (22) est constitué par un demi-canal (24) porté par la pièce inférieure (17), s'étendant jusqu'à la gorge (6) du projectile, et un demi-canal (23) porté par la pièce supérieure (21) et communiquant avec le premier trou d'injection (25) porté par l'élément de coquille.

## Claims

1. Sliding drive band in thermo-plastic material fitted onto a projectile (1) or onto a discarding-sabot projectile, a band comprising a drive band body (8) and a front ring (7) placed in a circumferential groove (6) of the projectile and separated by an axial clearance (12), characterised in that the bottom of the groove has, along its longitudinal section, a tapered support (9) wherein the angle towards the rear of the projectile is open and in that the band body (8) has an inner profile which matches that of the tapered support (9), the said inner profile being such that the spin of the projectile is limited during the firing phase.

2. Sliding drive band according to Claim 1, characterised in that the bottom of the groove (6) also has a cylindrical support (10) whereon the front ring (7) is fitted.

3. Sliding drive band according to Claim 2, characterised in that the cylindrical support (10) is constituted by the bottom of a cylindrical groove.

4. Manufacturing process for a sliding drive belt according to Claim 1, wherein a projectile (1) is placed in a mould enabling the drive band body (8) and the front ring (7) to be produced simultaneously by means of the injection of a thermo-plastic material.

5. Manufacturing process according to Claim 4, characterised by the following stages :
- Pre-heating of the different parts of the mould and of the projectile to a temperature of between 86°c and 94°c,
- Placing the projectile into the mould and clamping it into position,
- Injecting polyamide, for example 6-6 polyamide, at a temperature of between 300°c and 310°c and at a pressure of between 800 and 900 megapascal ,
- Cooling for at least 30 seconds,
- Demoulding.

6. Mould used for implementing the manufacturing process according to Claims 4 or 5, characterised in that it includes a dividing wall (15) which, when a projectile (1) or a discarding-sabot projectile is placed in the mould, is designed to come into contact with the bottom of the groove (6) fitted into the projectile or the sabot thereby forming two separate chambers level with the drive band groove of the projectile or of the sabot one of which enables the injection of the drive band body (8) and the other that of the front ring (7), and in that it includes an injection passage (22) enabling the two chambers to be filled simultaneously, one first chamber being demarcated notably by the dividing wall (15), an inner profile (28) of the mould, the tapered support (9) of the groove (6) of the projectile or of the sabot and by a wall (14) of the groove, a second chamber being demarcated notably by the dividing wall (15), the cylindrical support (10) of the groove (6) of the projectile or of the sabot and a wall (11) of the groove.

7. Mould according to Claim 6, characterised in that the dividing wall (15) is supported by two shell elements (19,20) designed to be assembled around the projectile (1) level with the drive band groove (6), these shell elements comprising the inner profile (28) enabling the drive band body (8) to be produced, and in that one shell element at least has a roughly radial injection hole (25,36) opening onto the inner profile.

8. Mould according to Claim 7, characterised in that the shell elements comprise a second inner profile (35) enabling the front ring (7) to be produced and in that one shell element at least has a second injection hole (37) opening onto this second inner profile and communicating with the first injection hole (36).

9. Mould according to Claims 7 or 8, characterised in that it comprises a lower part (17) designed to accommodate the projectile (1), as well as an upper part (21) which can be clamped onto the lower part (17) in such a way as to immobilise the projectile carrying the shell elements (19,20).

10. Mould according to Claim 9, characterised in that the injection passage (22) is constituted of a half-channel (24) carried by the lower part (17) extending s far as the groove (6) of the projectile, and a half-channel (23) carried by the upper part (21) and communicating with the first injection hole (25) in the shell element.

## Patentansprüche

1. Rutschgürtel aus Thermoplaststoff, an einem Geschoss (1) oder einem Schuhgeschoss montiert, mit einem Gürtelkörper (8) und einem vorderen Korn (7), die in einem umlaufenden Hals (6) des Geschosses angeordnet und von einem Axialspiel (12) getrennt sind, *dadurch gekennzeichnet,* dass der Halsboden im Längsabschnitt eine kegelförmige Auflage (9) aufweist, deren Winkel zum hinteren Teil des Geschosses hin geöffnet ist, und dass der Gürtelkörper (8) ein internes Profil aufweist, das dasjenige der kegelförmigen Auflage (9) ergänzt, wobei das besagte interne Profil so beschaffen ist, dass die Drehung des Geschosses während der Startphase begrenzt ist.

2. Rutschgürtel nach Anspruch 1, dadurch gekennzeichnet, dass der Halsboden (6) ebenfalls eine zylinderförmige Auflage (10) aufweist, auf die sich das vordere Korn (7) abstützt.

3. Rutschgürtel nach Anspruch 2, dadurch gekennzeichnet, dass die zylinderförmige Auflage (10) vom Boden einer zylinderförmigen Rille gebildet wird.

4. Herstellungsverfahren eines Rutschgürtels nach Anspruch 1, dadurch gekennzeichnet, dass man das Geschoss (1) in einer Form anordnet, die die gleichzeitige Herstellung des Gürtelkörpers und des vorderen Korns (7) durch Injektion eines Thermoplaststoffes ermöglicht.

5. Herstellungsverfahren nach Anspruch 4, gekennzeichnet von folgenden Etappen:
- Vorheizung der einzelnen Formteile sowie des Geschosses auf eine Temperatur von 86°C bis 94°C,
- Montage des Geschosses in der Form und Verschliessen derselben,
- Polyamid-Injektion, zum Beispiel Polyamid 6-6, bei einer Temperatur von 300°C bis 310°C und unter einem Druck von 800 bis 900 Mega-Pascal,
- Abkuhlung während mindestens 30 Sekunden,
- Ausformen.

6. Form zur Umsetzung des Verfahrens nach einem der Ansprüche 4 oder 5, dadurch gekennzeichnet, dass sie eine Wand (15) aufweist, die dazu dient, wenn man ein Geschoss (1) oder ein Schuhgeschoss in die Form legt, sich mit dem Boden des im Geschoss oder im Schuh vorgesehenen Halses (6) in Kontakt zu versetzen und somit zwei verschiedene Kammern am Hals des Geschossgürtels oder des Schuhs abtrennt, wobei eine die Injektion des Gürtelkörpers (8) und die andere diejenige des vorderen Korns (7) ermöglicht, und dass sie einen Injektionskanal (22) zur gleichzeitigen Versorgung der beiden Kammern aufweist, wobei eine erste Kammer insbesondere von der Wand (15), einem internen Profil (28) der Form, der kegelförmigen Auflage (9) des Halses (6) des Geschosses oder des Schuhs und einer Wand (14), und eine zweite Kammer insbesondere von der Wand (15), der zylinderförmigen Auflage (10) des Halses (6) des Geschosses oder des Schuhs und einer Wand (11) abgegrenzt wird.

7. Form nach Anspruch 6, dadurch gekennzeichnet, dass die Wand (15) von zwei Schalenelementen (19, 20) getragen wird, die um das Geschoss (1) herum am Hals des Gürtels (6) zusammengesetzt werden, wobei diese Schalenelemente ein internes Profil (28) zur Herstellung des Gürtelkörpers (8) umfassen, und dass zumindest ein Schalenelement ein im wesentlichen radiales Injektionsloch (25, 36) aufweist, das am internen Profil mündet.

8. Form nach Anspruch 7, dadurch gekennzeichnet, dass die Schalenelemente ein zweites internes Profil (35) zur Herstellung des vorderen Korns (7) aufweisen, und dass zumindest ein Schalenelement ein zweites Injektionsloch aufweist (37), das an diesem zweiten internen Profil mündet und mit dem ersten Injektionsloch (36) in Verbindung steht.

9. Form nach einem der Ansprüche 7 oder 8, dadurch gekennzeichnet, dass sie ein unteres Teil (17) zur Aufnahme des Geschosses (1) umfasst, sowie ein oberes Teil (21), das an das untere Teil (17) angeflanscht werden kann, um das Geschoss mit den Schalenelementen (19, 20) zu immobilisieren.

10. Form nach Anspruch 9, dadurch gekennzeichnet, dass der Injektionskanal (22) aus einem Halbkanal (24) auf dem unteren Teil (17) besteht, der sich bis zum Hals (6) des Geschosses erstreckt, und aus einem Halbkanal (23) auf dem oberen Teil (21), der mit dem ersten Injektionsloch (25) auf dem Schalenelement in Verbindung steht.
